# EUROPEAN PATENT APPLICATION

(11) **EP 4 804 311 A1**
(43) Date of publication of application: **09.09.2026**
(21) Application number: 24885894.6
(22) Date of filing: 01.11.2024
(51) Int. Cl.: H01M 50/204, H01M 10/625, H01M 10/651, H01M 10/658, H01M 10/6555, H01M 50/289, H01M 50/293

(54) **BATTERY PACK AND SPACER**

(30) Priority: 02.11.2023 JP 2023188889; 29.03.2024 JP 2024058036
(71) Applicant: Mitsubishi Chemical Corporation, Tokyo 100-8251 (JP)
(72) Inventor: NINOMIYA, Naoya, Tokyo 100-8251 (JP); HASHIMOTO, Kei, Tokyo 100-8251 (JP); KAWAI, Tomohiro, Tokyo 100-8251 (JP); KURODA, Kiyonori, Tokyo 100-8251 (JP); KAWANAMI, Keita, Tokyo 100-8251 (JP)
(74) Representative: Vossius & Partner Patentanwälte Rechtsanwälte mbB
(86) International application number: PCT/JP2024/039176
(87) International publication number: WO 2025/095130

(57) **Abstract**

Disclosed is a battery pack in which a spacer is disposed between unit cells, the battery pack being characterized in that the spacer includes an exterior material and an inclusion material, the exterior material includes a metal layer, and the metal layer is not in contact with the unit cells at a temperature of from 25 to 500°C. It is possible to provide a highly safe spacer and a battery pack incorporating the spacer.

## Description

### Technical Field

The present invention relates to a battery pack and a spacer.

### Background Art

The use of secondary batteries as power sources for vehicles and the like has grown dramatically in recent years. Studies have been conducted on further increasing an energy density of secondary batteries, for the purpose of, for instance, increasing a degree of freedom in mounting of a secondary battery in a limited space of a vehicle or the like, and extending a cruising range that can be covered with one charging. Meanwhile, a trade-off tends to arise in secondary batteries between safety and energy density, in that the higher the energy density of the secondary battery, the lower the safety of the battery tends to be. For instance, in secondary batteries mounted on electric vehicles with a cruising range of several hundreds of km, a battery surface temperature in the case of damage to the secondary battery, for instance, due to overcharge or internal short-circuits, may exceed several hundred degrees °C, and may reach about 1000°C.

Since the secondary battery used as the power source for a vehicle or the like is generally used as a battery pack including a plurality of unit cells, when one of the unit cells constituting the battery pack is damaged and reaches the temperature range as described above, there is a risk that the heat generation may damage adjacent unit cells and the damage may spread in a chain reaction across the entire battery pack. In order to prevent such a chain of damage among unit cells, various techniques have been proposed in which a spacer is provided between the unit cells to cool the damaged unit cells or a porous body is provided as a spacer between the unit cells.

For example, there has been proposed a spacer using a metal layer having a high barrier property for an exterior material for holding contained liquid (see Patent Literature 1).

### Citation List

### Patent Literature

Patent Literature 1: WO 2020/203646 A

### Summary of Invention

### Technical Problem

Patent Literature 1 discloses a spacer that can suppress a decrease in an amount of liquid contained in the spacer even when the spacer is used for a long period of time, and can prevent a decrease in heat transfer performance. However, in a case of abnormality, such as runaway of a battery, a resin layer of an outermost layer is melted and thermally decomposed, so that the metal layer inside is exposed, and there is a possibility that conduction between the unit cells is established. When the metal layer is exposed, high temperature heat is also transferred to a housing portion constituting the battery pack, which may cause a secondary abnormal situation. The present invention provides a spacer and a battery pack incorporating the spacer, which reduce the above possibility and have high safety in the spacer disclosed in Patent Literature 1 and a battery pack using the spacer disclosed in Patent Literature 1.

That is, an object of the present invention is to provide a highly safe spacer and a battery pack incorporating the spacer.

### Solution to Problem

As a result of intensive studies to solve the above problems, the present inventors have found that the above problems can be solved by providing a battery pack in which a spacer is disposed between unit cells, in the battery pack, the spacer includes an exterior material and an inclusion material, the exterior material includes a metal layer, and the metal layer is not in contact with the unit cells at a temperature of from 25 to 500°C, and have completed the present invention.

That is, the present invention includes the following aspects.
[1] A battery pack in which a spacer is disposed between unit cells, the spacer including an exterior material and an inclusion material, and the exterior material including a metal layer, wherein the metal layer is not in contact with the unit cells at a temperature of from 25 to 500°C.
[2] A battery pack in which a spacer is disposed between unit cells, the spacer including an exterior material and an inclusion material, the exterior material including a metal layer, and the exterior material including a first layer outside the metal layer with respect to the inclusion material, wherein a ratio of an area of the first layer after a heat treatment including heating from 25°C to 500°C at 10°C/min and holding at 500°C for 10 minutes to an area of the first layer before the heat treatment is 15% or more.
[3] The battery pack according to [2], wherein the first layer forms a carbonized layer under a condition of the heat treatment.
[4] The battery pack according to [2] or [3], wherein the first layer is a resin layer containing at least one of inorganic particles or a flame retardant.
[5] The battery pack according to [4], wherein the flame retardant contains a phosphoric acid ester.
[6] The battery pack according to [4] or [5], wherein the inorganic particles contain at least one selected from the group consisting of a metal oxide, a metal hydroxide, and a carbonaceous material.
[7] The battery pack according to any of [2] to [6], wherein a 5% weight loss temperature of a resin composition containing a resin contained in the first layer and at least one of inorganic particles or a flame retardant is from 30 to 80°C.
[8] The battery pack according to any of [2] to [7], wherein the first layer is a heat-resistant layer.
[9] The battery pack according to [8], wherein the heat-resistant layer contains a fibrous material.
[10] The battery pack according to any of [1] to [9], wherein a heat-resistant sheet is further disposed between the spacer and the unit cells.
[11] The battery pack according to [8] or [9], wherein the heat-resistant layer is a fibrous sheet.
[12] The battery pack according to any of [2] to [11], wherein the first layer has a thickness of from 10 to 125 µm.
[13] The battery pack according to any of [2] to [12], wherein a ratio of a thickness of the inclusion material to a thickness of the first layer is from 0.002 to 0.2.
[14] The battery pack according to any of [1] to [13], wherein the spacer contains a liquid in the inclusion material.
[15] The battery pack according to any of [1] to [13], wherein the spacer contains a porous body in the inclusion material.
[16] The battery pack according to any of [1] to [15], wherein the spacer has a thermal conductivity of 0.18 W/(m·K) or more at a surface average temperature of 45°C.
[17] The battery pack according to any of [1] to [16], wherein the spacer has a thermal conductivity of less than 0.20 W/(m·K) at a surface average temperature of 180°C.
[18] A spacer including an exterior material and an inclusion material, wherein the exterior material includes a metal layer, the exterior material further includes a first layer outside the metal layer with respect to the inclusion material, and a ratio of an area of the first layer after a heat treatment including heating from 25°C to 500°C at 10°C/min and holding at 500°C for 10 minutes to an area of the first layer before the heat treatment is 15% or more.
[19] A method for producing a spacer including an exterior material and an inclusion material, the exterior material including a metal layer and a first layer, wherein a ratio of an area of the first layer after a heat treatment including heating from 25 to 500°C at 10°C/min and holding at 500 for 10 minutes to an area of the first layer before the heat treatment is 15% or more, the method including stacking the first layer outside the metal layer with respect to the inclusion material.
[20] A method for producing a battery pack including a unit cell and a spacer including an exterior material, the exterior material including a metal layer, wherein the metal layer and the unit cell are configured not to be in contact with each other at a temperature of from 25 to 500°C, the method including disposing the spacer between two unit cells.
[21] A method for suppressing conduction between unit cells, wherein a spacer disposed between the unit cells inhibits contact between the metal layer and the unit cells at a temperature of from 25 to 500°C.
[22] A method for using an inter-battery spacer, the spacer including an exterior material and an inclusion material, and the exterior material including a metal layer and a first layer outside the metal layer with respect to the inclusion material, wherein a ratio of an area of the first layer after a heat treatment including heating from 25°C to 500°C at 10°C/min and holding at 500 for 10 minutes to an area of the first layer before the heat treatment is 15% or more.

### Advantageous Effects of Invention

According to the present invention, it is possible to eliminate the possibility of conduction between unit cells even when a crack is generated in an inclusion material in a spacer and liquid is eluted from an outermost layer in a case of abnormality, such as runaway of a battery, and to provide a spacer having high safety and a battery pack in which the spacer is incorporated.

### Brief Description of Drawings

FIG. 1 illustrates a configuration example of a spacer according to an embodiment.
FIG. 2 is a cross-sectional view of the spacer illustrated in FIG. 1, taken along line A-A.
FIG. 3 illustrates an example of a unit cell.
FIG. 4 is a front view of the unit cell illustrated in FIG. 3.
FIG. 5 is a side view of the unit cell illustrated in FIG. 3.
FIG. 6 is a top view illustrating an example of a battery pack.
FIG. 7 is a side view schematically illustrating a side surface of the battery pack illustrated in FIG. 6 in a state where a side plate on a front side is removed.
FIG. 8 is a view illustrating an evaluation method of insulating properties.

### Description of Embodiments

The present invention will be described below. The following description of the embodiments shown in the drawings is exemplary, and the present invention is not limited to the configurations shown in the drawings.

### Battery Pack

The battery pack of the present invention is a battery pack in which a spacer is disposed between unit cells. The battery pack includes a plurality of unit cells, and the spacer is provided between the unit cells so as to prevent a chain of damage between the unit cells when one of the unit cells constituting the battery pack is damaged and reaches a high temperature.

The spacer is provided with a metal layer in order to maintain a thermal conductivity during normal operation. However, at a high temperature in a case of abnormality, a resin included in the battery pack melts, for example, so that the metal is exposed and conduction between the unit cells occurs.

In contrast, in the battery pack of the present invention, the metal layer is not in contact with the unit cells at a temperature of from 25 to 500°C. That is, since the metal layer is not in contact with the unit cells in a region from room temperature to high temperature, conduction between the unit cells does not occur, and the chain of damage between the unit cells can be suppressed.

As one aspect of a mechanism in which the metal layer is not in contact with the unit cells at a temperature of from 25 to 500°C, the battery pack of the present invention has a first layer outside the metal layer, and the first layer forms a coating such as a carbonized layer in a case of abnormality, thereby suppressing contact between the metal and the unit cell.

Hereinafter, the spacer having such a function will be described.

The numerical range "from X to Y" in the present specification means, for example, X°C or higher and Y°C or lower in the case of temperature, and a preferable upper limit and a preferable lower limit can be optionally combined.

### Spacer

A spacer according to one embodiment of the present invention is a spacer including an exterior material and an inclusion material, and the spacer is characterized in that the exterior material includes a metal layer, the exterior material further includes a first layer outside the metal layer with respect to the inclusion material, and the ratio of an area of the first layer after a heat treatment including heating from 25°C to 500°C at 10°C/min and holding at 500 for 10 minutes to an area thereof before the heat treatment (hereinafter, the ratio will be referred to simply as "residual area ratio") is 15% or more. From the viewpoint of suppressing conduction between the unit cells, the lower limit is preferably 30% or more, more preferably 50% or more, and the upper limit is preferably 100% or less, more preferably 99% or less.

When the residual area ratio of the first layer included in the exterior material constituting the spacer is 15% or more, the contact between the metal layer and the unit cell is inhibited. Even when the exterior material is carbonized, a film state can be maintained, and the carbonized layer is formed, so that conduction between the unit cells is suppressed.

The residual ratio is a ratio of the area after the heat treatment held at 500°C for 10 minutes to the area before the heat treatment. An image of a square sample in plan view is divided into 10 square sections, and a ratio of the sections in which the sample remains even after the heat treatment is calculated.

When the square is divided into four square sections, it is preferable that the first layer remains in two or more sections, it is more preferable that the first layer remains in three or more sections, and it is still more preferable that the first layer remains in four or more sections.

When the square is divided into 25 square sections, it is preferable that the first layer remains in 10 or more sections, it is more preferable that the first layer remains in 15 or more sections, and it is still more preferable that the first layer remains in 20 or more sections.

The thermal conductivity of the spacer at a surface average temperature of 45°C is preferably 0.18 W/(m·K) or more. When the thermal conductivity is 0.18 W/(m·K) or more, it is advantageous for cooling the unit cell in a normal state. From the above viewpoint, the thermal conductivity at a surface average temperature of 45°C is more preferably 0.20 W/(m·K) or more, and still more preferably 0.25 W/(m·K) or more. The upper limit value of the thermal conductivity at a surface average temperature of 45°C is not particularly limited, and is usually preferably 1.0 W/(m·K) or less.

Meanwhile, the thermal conductivity of the spacer at a surface average temperature of 180°C is preferably less than 0.20 W/(m·K), and more preferably less than 0.18 W/(m·K). When the thermal conductivity is less than 0.20 W/(m·K), thermal conduction at the time of abnormal heat generation is suppressed, and thermal runaway of the battery pack can be suppressed. From the above viewpoint, the thermal conductivity at a surface average temperature of 180°C is more preferably 0.15 W/(m·K) or less, and still more preferably 0.10 W/(m·K) or less. From the same viewpoint, the thermal conductivity is preferably lower than the thermal conductivity at a surface average temperature of 45°C.

The spacer having the above configuration can be provided such that the exterior material and the inclusion material are not joined.

Here, the expression "the exterior material and the inclusion material are not joined" means that an inner surface of the exterior material and a surface of the inclusion material are not substantially bonded to each other at the interface therebetween, and the inclusion material is movable in the exterior material.

The "surface average temperature" refers to an average value of temperatures measured at any three points when the entire surface of the spacer is heated at a predetermined temperature.

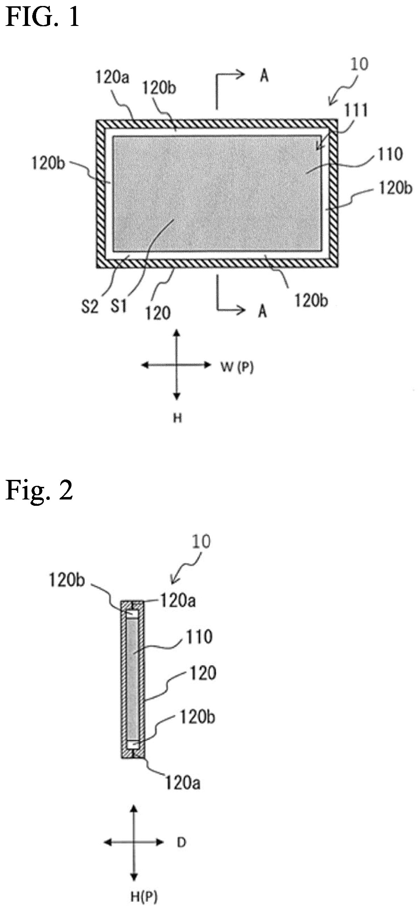

FIG. 1 is a view illustrating a configuration example of the spacer of the present invention. FIG. 1 illustrates a front view of a spacer 1. FIG. 2 illustrates a cross section on a right side surface side when the spacer illustrated in FIG. 1 is cut along line A-A.

In the example of FIGS. 1 and 2, the spacer 1 has a flat plate shape or a sheet-like overall shape having a height direction (H), a width direction (W), and a thickness direction (D). The spacer 1 has the thickness direction (D) and a plane direction (P) orthogonal to the thickness direction (D). The plane direction (P) includes the height direction (H) and the width direction (D) described above, and a plurality of oblique directions between the height direction (H) and the width direction (D).

The spacer 1 is used to partition the unit cells constituting the battery pack or the unit cells and a member other than the unit cells in the thickness direction (D). The spacer 1 includes an inclusion material 110, and is preferably formed in a plate shape or a sheet shape by enclosing the inclusion material 110 in the exterior material 120.

The thickness of the spacer 1 is preferably from 0.80 to 20 mm, and more preferably from 1.0 to 10 mm.

### Exterior Material

The inclusion material 110 of the spacer 1 may be sealed by the exterior material 120 or may not be sealed. The spacer may have a laminated structure in which the exterior material is disposed outside with respect to the inclusion material. When a liquid is used as the inclusion material, the inclusion material 110 is preferably sealed by the exterior material 120. The "exterior material" refers to a laminated body located on the spacer surface and including at least a metal layer.

In the example illustrated in FIG. 1, the exterior body 120 is provided with a sealing portion 120a that seals a peripheral edge portion of the exterior body, and the heat insulating material 110 is accommodated in an internal space 111 formed in the exterior body 120 by being sealed by the sealing portion 120a. In the example illustrated in FIG. 1, a gap 120b is provided between the sealing portion 120a and the heat insulating material 110 in the internal space 111. In other words, the internal space 111 includes a first region S1 where the exterior body 120 overlaps with the heat insulating material 110 and a second region S2 where the exterior body 120 does not overlap with the heat insulating material 110 in a plan view of a front side of the spacer 1. However, the gap 120b is not necessarily required. The gap 120b may be in a state where inner surfaces of the exterior body 120 are in contact with each other when a fluid (gas and liquid) is absent in the gap. In the present invention, the volume of the internal space 111 is defined as a product of the area of the internal space 111 and the thickness of the heat insulating material 110. The heat insulating material is not necessarily disposed at the center of the internal space, and is not necessarily parallel to the exterior body.

One aspect of the exterior material 120 includes a metal layer. In addition, one aspect of the exterior material 120 may include a plurality of layers. Preferably, the exterior material includes at least a metal layer, and the first layer outside the metal layer with respect to the inclusion material is a resin layer containing at least one of inorganic particles or a flame retardant (hereinafter may be referred to as the "first aspect").

In addition, the first layer outside the metal layer with respect to the inclusion material is preferably a heat-resistant layer (hereinafter may be referred to as the "second aspect").

One aspect of the exterior material 120 is an exterior material in which the first layer becomes a carbonized layer under an atmosphere of 500°C.

One aspect of the exterior material 120 is an exterior material in which the residual area ratio in a plan view from a thickness direction under an atmosphere of 500°C is 15% or more.

From the viewpoint of making the contact with the metal layer difficult, the lower limit of the residual area ratio is preferably 30% or more, more preferably 50% or more, and still more preferably 70% or more. The upper limit of the residual area ratio is usually 100% or less.

When the residual area ratio is 15% or more, the area of the carbonized layer becomes sufficient, and conduction between the unit cells and between the metal layer and the battery can be suppressed.

The exterior material preferably includes a second layer located inside the metal layer, and the second layer is preferably a sealant resin layer. In addition, a reinforcing layer may be included between the metal layer and the second layer.

The thickness of the exterior material 120 is not particularly limited, and in consideration of the thickness of each layer described above, the thickness is preferably 20 µm or more, more preferably 30 µm or more, and still more preferably 40 µm or more from the viewpoint of mechanical strength. In order to ensure flexibility, the thickness of the exterior material 120 is preferably 220 µm or less, more preferably 150 µm or less, and still more preferably 110 µm or less.

Hereinafter, the resin layer (first layer) (first aspect), the heat-resistant layer (first layer) (second aspect), the metal layer, the sealant resin layer (second layer), and the reinforcing layer will be described.

### Resin Layer (First Layer) (First Aspect)

One aspect of the resin layer contains at least one of inorganic particles or a flame retardant. The resin layer is not particularly limited, and examples thereof include polyolefin-based resins such as a homopolymer or a copolymer of ethylene, propylene, or butene; amorphous polyolefin-based resins such as a cyclic polyolefin; polyester-based resins such as polyethylene terephthalate (PET) and polyethylene naphthalate (PEN); polyamide-based resins such as nylon 6, nylon 66, nylon 12, and copolymerized nylon; ethylene-vinyl acetate copolymer partial hydrolysate (EVOH), a polyimide-based resin, a polyether imide-based resin, a polysulfone-based resin, a polyether sulfone-based resin, a polyether ether ketone-based resin, a polycarbonate-based resin, a polyvinyl butyral-based resin, a polyarylate-based resin, a fluororesin, an acrylic resin, and a biodegradable resin. Among them, a polyamide-based resin such as nylon 6 and a polyester-based resin such as polyethylene terephthalate are preferable from the viewpoint of being able to impart heat resistance and mechanical strength as the exterior material. The resin layer may be formed of only one layer or may be formed by laminating two or more layers. In the case of two or more layers, the resin layers may be selected from different resin layers, or may be selected from the same resin layer.

When the resin layer has multiple layers, the resin layer includes all the multiple layers.

The thickness of the resin layer is not particularly limited, and the thickness of the first layer is preferably from 10 to 125 µm and more preferably from 10 to 40 µm from the viewpoint of flexibility.

### Inorganic Particles

The resin layer (first layer) may contain inorganic particles from the viewpoint of improving insulating properties. Examples of the inorganic particles include metal oxides such as silica, aluminum oxide, and titanium oxide, metal hydroxides such as potassium hydroxide and calcium hydroxide, and carbonaceous materials such as carbon black. More specific examples include silica, calcium carbonate, magnesium carbonate, barium carbonate, calcium sulfate, calcium phosphate, magnesium phosphate, kaolin, aluminum oxide, titanium oxide, and carbon black. Among these inorganic particles, silica, aluminum oxide, titanium oxide, and carbon black are preferable from the viewpoint of improving insulating properties, and among them, silica, titanium oxide, and carbon black are particularly preferable.

One type of the inorganic particles can be used alone, or a combination of two or more types of the inorganic particles can be used. Therefore, silica, titanium oxide, and carbon black, which are suitable particles, can be used in combination.

In addition to the inorganic particles, particles used in the related art may be added in order to impart lubricity to a polyester film, prevent generation of scratches in each step, and improve handleability.

These particles are not particularly limited as long as the particles can impart the lubricity, and specific examples thereof include, in addition to the inorganic particles, crosslinked polymers such as crosslinked silicone resin particles, crosslinked acrylic resin particles, crosslinked styrene-acrylic resin particles, and crosslinked polyester particles, and organic particles such as calcium oxalate and an ion-exchange resin.

In addition, precipitated particles obtained by precipitating and finely dispersing a portion of a metal compound such as a catalyst during the polyester production process can also be used.

### Shape of Particles

The shape of the particles used in the present resin layer (first layer) is not particularly limited, and any of a spherical shape, a massive shape, a rod shape, a flat shape, and the like may be used.

In addition, the hardness, specific gravity and color of the particles are not particularly limited. Two or more types of these series of particles may be used in combination as necessary.

Here, the particles include both inorganic particles for improving the insulating properties of the present resin layer (first layer) and particles for improving the lubricity of the present resin layer (first layer).

### Average Particle Diameter of Particles

The average particle diameter of the particles used in the present resin layer (first layer) is usually from 0.05 µm to 5.0 µm, preferably from 0.10 µm to 4.5 µm, more preferably from 0.20 µm to 4.5 µm, and particularly preferably from 0.40 µm to 4.5 µm. By using within the above range, desired insulating properties of the present resin layer (first layer) can be secured.

When the particles are in the form of powder, the average particle diameter of the particles can be determined by taking, as the average particle diameter, a particle diameter (d50) at an integrated volume fraction of 50% in an equivalent spherical distribution obtained by measuring the powder using a centrifugal sedimentation particle size distribution measuring apparatus (e.g., "SA-CP3 type" available from Shimadzu Corporation). The average particle diameter of the particles in the layer or the resin can be determined by observing 10 or more particles with a scanning electron microscope (SEM), measuring the diameters of the particles, and calculating the average value thereof. When the particles are non-spherical, the longest diameter and the shortest diameter of each particle can be measured, and the average value of the longest and shortest diameters can be used as the diameter of the particle.

When the particles are contained in the present resin layer (first layer), for example, it is preferable that a surface layer and an intermediate layer are provided, and the particles are contained in the surface layer. When the front and back sides are designed differently by a three-type three-layer structure or the like, the particles can be contained only in at least one surface layer.

The method for adding the particles into the present resin layer (first layer) is not particularly limited, and a method known in the related art can be employed. For example, the particles can be added at any stage of producing the polyester; however, it is preferable to add the particles after completion of esterification or transesterification reaction.

### Flame Retardant

In the present invention, it is preferable to contain a phosphoric acid ester as a flame retardant, and it is preferable to use an organophosphorus flame retardant compound.

Examples of the phosphoric acid ester include phosphoric acid ester-based compounds such as trimethyl phosphate, triethyl phosphate, triphenyl phosphate, tricresyl phosphate, trixylenyl phosphate, cresyldiphenyl phosphate, and cresyl di 2,6-xylenyl phosphate; condensed phosphoric acid ester-based compounds such as 1,3-phenylenebis(2,6-dimethylphenyl) phosphate, tetraphenyl(m-phenylene) bisphosphate, and bis(ditolyl)isopropylidene-di-p-phenylene phosphate; phosphoric acid ester amide-based compounds such as 4,4'-bis(diphenylphosphorylamidophenyl)methane; and phosphazene-based compounds such as phosphonitrile acid phenyl ester.

The structure of the organophosphorus flame retardant compound is not particularly limited, and examples thereof include carboxymethylphenyl phosphate, (2-carboxyethyl)phenyl phosphate, (2-carboxyethyl)tolyl phosphate, (2-carboxyethyl)2,5-dimethylphenyl phosphate, (2-carboxyethyl)cyclohexyl phosphate, (carboxypropyl)phenyl phosphate, (4-carboxyphenyl)phenyl phosphate, (3-carboxyphenyl)phenyl phosphate, (2-carboxyethyl)methyl phosphate, (2-carboxyethyl)ethyl phosphate, triphenyl phosphate, tributyl phosphate, t-butyldiphenyl phosphate, tris(2-ethylhexyl) phosphate, bisphenol A bis(diphenyl phosphate)-1,3-phenylbis(diphenyl phosphate), phosphonitrile acid diphenyl ester, and a compound as represented by the following Formula (1).

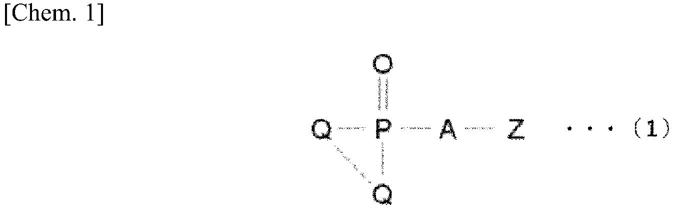

In Formula (1) above, A is a divalent or trivalent organic residue, and preferable examples thereof include lower alkylene groups such as a methylene group, an ethylene group, a 1,2-propylene group, and 1,3-propylene, arylene groups such as a 1,3-phenylene group and a 1,4-phenylene group, and divalent groups such as a 1,3-xylylene group and a 1,4-xylylene group.

Specific examples of the trivalent organic residue include the following.

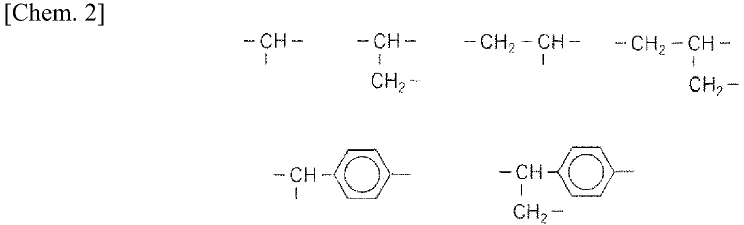

In Formula (1) above, Q is a hydrocarbon group having from 1 to 18 carbons, and examples thereof include an alkyl group, a cycloalkyl group, an aryl group, an alkoxy group, and an allyloxy group.

Z is an ester-forming functional group, and specific examples thereof include a carboxy group, an alkyl ester in which the number of carbon atoms of the carboxy group is from 1 to 6, a cycloalkyl ester, an aryl ester, a hydroxy group, and a hydroxylalkoxycarbonyl group having from 2 to 7 carbon atoms.

As described above, the structure of the organophosphorus flame retardant compound used in the present invention is not limited, and among them, it is preferable to use a de-ethylene glycol polycondensate of bis-(2-hydroxyethyl) 2-(9,10-dihydro-9-oxa-10-oxide-10-phosphaphenanthren-10-yl) methylsuccinate (the following Formula (2)). This organophosphorus compound contains a phosphorus atom in the molecule, and the lower limit value of the average molecular weight measured by GPC measurement is 1170, preferably 2290 or more, and more preferably 3410 or more. When the average molecular weight is 1170 or more, volatilization of the organophosphorus compound and crystallization of the polyester resin during film formation are not inhibited, and in addition, bleeding out of the organophosphorus compound is suppressed, so that the mechanical strength of the resin layer (first layer) is maintained. The upper limit value of the average molecular weight of the organophosphorus compound is not particularly specified, and it is considered that dispersibility in the polyester resin is deteriorated when the molecular weight is excessively increased.

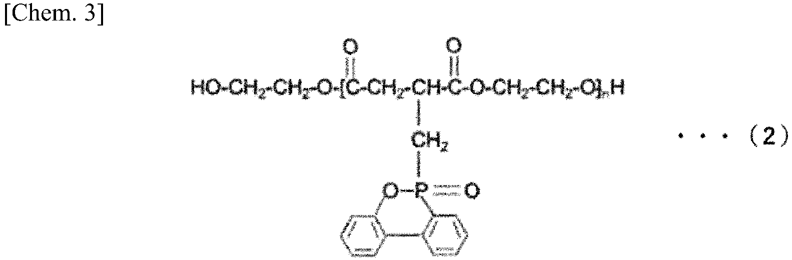

The method for incorporating the phosphoric acid ester and the organophosphorus flame retardant compound during production of the resin layer (first layer) is not particularly limited.

For example, when a polyester is produced by a so-called transesterification method of a dicarboxylic acid diester and a diol, the organophosphorus flame retardant compound may be added during the transesterification reaction, or the organophosphorus flame retardant compound may be added before a polycondensation reaction after the transesterification reaction or at a relatively early stage of the polycondensation. Also, when a polyester is produced by an esterification method of a dicarboxylic acid and a diol, the compound can be added at any esterification stage.

The content of the phosphate ester and the organophosphorus flame retardant compound in the resin layer (first layer) can be estimated in terms of phosphorus element amount. The content in terms of phosphorus element amount is preferably from 0.2 mass% to 3.5 mass%, more preferably from 0.5 mass% to 3.0 mass%, and particularly preferably from 1.0 mass% to 3.0 mass%.

By satisfying the above range, good flame retardancy can be imparted.

The total content of the particles and the flame retardant is preferably more than 0.1 mass% in the first layer. The content is more preferably 0.5 mass% or more. Meanwhile, the upper limit is preferably 30 mass% or less from the viewpoint of handleability of the resin layer (first layer). Within the above range, good insulating properties can be exhibited even when the present resin layer (first layer) is used in a high-temperature atmosphere (e.g., 500°C).

### Additional Component

In order to suppress the precipitation amount of an oligomer component, the resin layer (first layer) may be produced using a polyester having a small content of the oligomer component as a raw material. The method for producing a polyester having a small oligomer component content may be any known method, and examples thereof include a method in which solid phase polymerization is performed after production of a polyester.

The present resin layer (first layer) may be configured to have three or more layers, and the surface layer of the present resin layer (first layer) may be a layer using a polyester raw material having a small content of an oligomer component, whereby the precipitation amount of the oligomer component may be suppressed.

In addition, the polyester may be produced by performing esterification or transesterification reaction and then performing melt polycondensation under reduced pressure at a higher reaction temperature.

In addition to the above-described particles, an additive known in the related art, such as an ultraviolet absorber, an antioxidant, an antistatic agent, a heat stabilizer, a lubricant, a dye, or a pigment may be added to the present resin layer (first layer) as necessary.

The present resin layer (first layer) may contain an additional resin other than polyester as long as the effects of the present invention are not impaired.

Examples of the additional resin include a polystyrene-based resin, a polyvinyl chloride-based resin, a polyvinylidene chloride-based resin, a chlorinated polyethylene-based resin, a polycarbonate-based resin, a polyamide-based resin, a polyacetal-based resin, an acryl-based resin, an ethylene-vinyl acetate copolymer, a polymethylpentene-based resin, a polyvinyl alcohol-based resin, a cyclic olefin-based resin, a polylactic acid-based resin, a polybutylene succinate-based resin, a polyacrylonitrile-based resin, a polyethylene oxide-based resin, a cellulose-based resin, a polyimide-based resin, a polyurethane-based resin, a polyphenylene sulfide-based resin, a polyphenylene ether-based resin, a polyvinyl acetal-based resin, a polybutadiene-based resin, a polybutene-based resin, a polyamideimide-based resin, a polyamide bismaleimide-based resin, a polyetherimide-based resin, a polyether ether ketone-based resin, a polyether ketone-based resin, a polyether sulfone-based resin, a polyketone-based resin, a polysulfone-based resin, an aramid-based resin, and a fluorine-based resin.

### 5% Weight Loss Temperature

The 5% weight loss temperature of the resin composition containing the resin contained in the first layer and at least one of inorganic particles or a flame retardant is preferably from 30 to 80°C. The 5% weight loss temperature of from 30 to 80°C is advantageous in terms of formation of a carbonized layer. From the above viewpoint, the 5% weight loss temperature is more preferably from 30 to 70°C and still more preferably from 30 to 60°C.

### Heat-Resistant Layer (First layer) (Second aspect)

In the spacer of the present invention, the exterior material preferably includes a plurality of layers, and the first layer outside the metal layer with respect to the inclusion material is preferably a heat-resistant layer.

As the heat-resistant layer, a heat-resistant sheet can be used. The "heat-resistant" in the present specification means that the weight residual rate determined by thermogravimetric differential thermal analysis is 15.0% or more. The heat-resistant layer may be included in one layer of the exterior body of the spacer, or the heat-resistant sheet independent of the spacer may be used in combination with the spacer. Examples of the heat-resistant sheet include a fibrous sheet, a thermoplastic resin sheet, and a thermosetting resin sheet.

The fibrous sheet is not particularly limited, and examples thereof include a cotton fiber sheet, a polyester fiber sheet, a rayon fiber sheet, a linen fiber sheet, a silk fiber sheet, a nylon fiber sheet, an acrylic fiber sheet, a polypropylene fiber sheet, a wool fiber sheet, and a glass cloth sheet. Among them, a glass cloth sheet is preferable from the viewpoint of suppressing decomposition and deterioration of components even at a high temperature and from the viewpoint of being able to impart heat resistance and mechanical strength as an exterior material.

The thermoplastic resin sheet to be used may be sheets of polyolefin-based resins such as polyethylene and polypropylene, polyester-based resins such as polyethylene terephthalate (PET) and polyethylene naphthalate (PEN), polyamide-based resins such as nylon 6, nylon 66, nylon 12, and copolymerized nylon, polyimide-based resins such as thermoplastic polyimide, fluorine-based resins such as tetrafluoroethylene resin and tetrafluoroethylene-hexafluoropropylene copolymer resin, polysulfone-based resins, polyether sulfone-based resins, polyether ether ketone-based resins, polycarbonate-based resins, polyvinyl butyral-based resins, polyarylate-based resins, acrylic resins, biodegradable resins, and the like.

The thermosetting resin sheet to be used may be sheets of an epoxy-based resin, a polyimide-based resin, a polyether imide-based resin, a phenol-based resin, a melamine-based resin, a polyurethane-based resin, and the like.

These sheets may be formed of only one layer or may be formed by laminating two or more layers. In the case of two or more layers, the layers may be selected from different resin layers, or may be selected from the same sheet.

Among the heat-resistant layers described above, a fibrous layer containing a fibrous sheet is preferable from the viewpoint of suppressing the thermal conductivity.

The thickness of the heat-resistant layer is not particularly limited, and the thickness of the first layer is preferably from 10 to 125 µm and more preferably from 10 to 99 µm from the viewpoint of flexibility. When the fibrous layer is used, the fiber diameter is not particularly limited, and is preferably from 1 to 50 µm and more preferably from 20 to 50 µm from the viewpoint of increasing a piercing strength.

The ratio of the thickness of the inclusion material to the thickness of the first layer is preferably from 0.002 to 0.3 (thickness of inclusion material/thickness of first layer, hereinafter may be referred to as "thickness ratio 1"). When the thickness ratio 1 is 0.002 or more, it is advantageous in terms of suppressing wrinkles at a boundary portion of the inclusion material, whereas when the thickness ratio 1 is 0.3 or less, it is advantageous in terms of followability with the boundary portion of the inclusion material. From the above viewpoint, the thickness ratio 1 is more preferably 0.005 or more.

Meanwhile, when the first layer is a resin layer, the thickness ratio 1 is more preferably 0.15 or less, still more preferably 0.10 or less, even more preferably 0.080 or less, particularly preferably 0.060 or less, and most preferably 0.040 or less.

When the first layer is a heat-resistant layer, the thickness ratio 1 is more preferably 0.25 or less, still more preferably 0.20 or less, even more preferably 0.15 or less, and particularly preferably 0.10 or less.

### Metal Layer

Examples of the metal layer include an aluminum foil, a copper foil, a tin foil, a nickel foil, a stainless steel foil, a lead foil, a tin-lead alloy foil, a bronze foil, an iridium foil, and a phosphor bronze foil. In particular, an aluminum foil, a copper foil, or a nickel foil is preferable from the viewpoint of processability and material availability, and an aluminum foil is more preferable from the viewpoint of low density and easy handling.

The thickness of the metal layer is not particularly limited as long as it is 5 µm or more, and is preferably 8 µm or more, and more preferably 12 µ or more from the viewpoint of suppressing pinhole generation, and is preferably 50 µm or less, more preferably 35 µm or less, and still more preferably 20 µm or less from the viewpoint of securing flexibility.

The ratio of the thickness of the metal layer to the thickness of the first layer is preferably from 0.01 to 6 (thickness of inclusion material/thickness of first layer, hereinafter may be referred to as "thickness ratio 2"). When the thickness ratio 2 is 0.01 or more, it is advantageous in terms of suppressing wrinkles at the boundary portion of the inclusion material, whereas when the thickness ratio 2 is 6 or less, it is advantageous in terms of followability with the boundary portion of the inclusion material. From the above viewpoint, the thickness ratio 2 is more preferably 0.05 or more, and still more preferably 0.1 or more.

Meanwhile, when the first layer is a resin layer, the thickness ratio 2 is more preferably 5 or less, still more preferably 4 or less, even more preferably 3 or less, particularly preferably 2 or less, and most preferably 1 or less.

When the first layer is a heat-resistant layer, the thickness ratio 2 is more preferably 3 or less, still more preferably 2 or less, even more preferably 1 or less, and particularly preferably 0.5 or less.

### Sealant Resin Layer (Second Layer)

Examples of the sealant resin include polyolefin-based resins such as a homopolymer or a copolymer of ethylene, propylene, or butene; amorphous polyolefin-based resins such as a cyclic polyolefin; polyester-based resins such as polyethylene terephthalate (PET) and polyethylene naphthalate (PEN); polyvinyl butyral-based resins, acrylic resins, and biodegradable resins. Among them, it is preferable to use at least one selected from polyolefin-based resins such as high-pressure low-density polyethylene (LDPE), linear low-density polyethylene (LLPDE), and polypropylene resin from the viewpoint of melting characteristics at a low temperature for obtaining a function of releasing the liquid inside the exterior material to the outside in a case of abnormal heat generation. In addition, it is more preferable to use a non-oriented polypropylene resin from the viewpoint of long-term storage in a temperature range usually used as the spacer of the battery pack and from the viewpoint of versatility.

The thickness of the sealant resin layer is not particularly limited, and is preferably 10 µm or more, more preferably 20 µm or more, and still more preferably 30 µm or more, from the viewpoint of securing sealability. In order to ensure flexibility, the thickness of the sealant resin layer is preferably 120 µm or less, more preferably 100 µm or less, and still more preferably 80 µm or less.

### Reinforcing Layer

The exterior material may further include a reinforcing layer between the metal layer and the second layer.

The reinforcing layer is not particularly limited, and examples thereof include polyolefin-based resins such as a homopolymer or a copolymer of ethylene, propylene, or butene; amorphous polyolefin-based resins such as a cyclic polyolefin; polyester-based resins such as polyethylene terephthalate (PET) and polyethylene naphthalate (PEN); polyamide-based resins such as nylon 6, nylon 66, nylon 12, and copolymerized nylon; ethylene-vinyl acetate copolymer partial hydrolysate (EVOH), a polyimide-based resin, a polyether imide-based resin, a polysulfone-based resin, a polyether sulfone-based resin, a polyether ether ketone-based resin, a polycarbonate-based resin, a polyvinyl butyral-based resin, a polyarylate-based resin, a fluororesin, an acrylic resin, and a biodegradable resin. Among them, a polyamide-based resin such as nylon 6 and a polyester-based resin such as polyethylene terephthalate are preferable from the viewpoint of being able to impart heat resistance and mechanical strength as the exterior material, and a polyamide-based resin such as nylon 6 is more preferable from the viewpoint of improving pinhole resistance of the metal layer. The reinforcing layer may be formed of only one layer or may be formed by laminating two or more layers. In the case of two or more layers, the reinforcing layers may be selected from different resin layers, or may be selected from the same resin layer.

The thickness of the reinforcing layer is not particularly limited, and is preferably 5 µm or more, more preferably 10 µm or more, and still more preferably 15 µm or more from the viewpoint of being able to impart mechanical strength. In order to ensure flexibility, the thickness is preferably 100 µm or less, more preferably 50 µm or less, and still more preferably 30 µm or less.

### Inclusion Material

One aspect of the inclusion material 110 includes a liquid. The "inclusion material" refers to a material disposed between a pair of "exterior materials". The "liquid" is not particularly limited as long as it is a material that causes the function of the spacer. The liquid means a substance that is in a fluid state at 100°C and 1 atm, and the fluid state is preferably a liquid state. For example, a substance such as a gel that is not in the fluid state at 25°C but in the fluid state at 100°C and 1 atm is also included.

Any liquid can be used as the liquid. From the viewpoint of safety, the liquid preferably contains water.

One aspect of the inclusion material 110 includes a porous body. The porous body contains either one of a powdery inorganic substance and a fibrous inorganic substance. In the present invention, the "fibrous inorganic substance" means an inorganic substance having a shape whose major axis length is 100 times or more the minor axis length, and the "powdery inorganic substance" means an inorganic substance having a shape whose major axis length is less than 100 times the minor axis length. In particular, in the case of the fibrous shape, the "major axis length" means a fiber length, and the "minor axis length" means a diameter of a cross section orthogonal to the major axis direction.

The fibrous inorganic substance is, for example, preferably at least one selected from the group consisting of paper, a cotton sheet, a polyimide fiber, an aramid fiber, a polytetrafluoroethylene (PTFE) fiber, a glass fiber, a rock wool, a ceramic fiber, and a biosoluble inorganic fiber, and among these, the fibrous inorganic substance is particularly preferably at least one selected from a glass fiber, a rock wool, a ceramic fiber, and a biosoluble inorganic fiber. The ceramic fiber is preferably a fiber mainly composed of silica and alumina (silica:alumina = 40:60 to 0:100), and specifically, silica-alumina fiber, mullite fiber, or alumina fiber can be used.

The powdery inorganic substance is, for example, preferably at least one selected from the group consisting of silica particles, alumina particles, calcium silicate, clay mineral, vermiculite, mica, cement, perlite, fumed silica, and aerogel, and among these, the powdery inorganic substance is particularly preferably at least one selected from silica particles, alumina particles, calcium silicate, and vermiculite. Among the types of calcium silicate, xonotlite, tobermorite, wollastonite, and gyrolite are preferable, and gyrolite is particularly preferable. A gyrolight having a petal-like structure maintains a porous structure even when compressed and deformed, and thus has excellent liquid retaining property. The clay minerals are mainly magnesium silicate (including talc and sepiolite), montmorinite, and kaolinite.

As the porous body containing the fibrous inorganic substance and the powdery inorganic substance, a porous body satisfying a predetermined density can be selected from known porous bodies and used. For example, the porous body can be selected and used from those described in JP 2003-202099 A.

The thermal conductivity of the porous body is usually less than 0.18 [W/(m·K)] for the purpose of blocking heat transfer when an abnormality occurs between the unit cells. The thermal conductivity is preferably less than 0.15 [W/(m·K)], and more preferably less than 0.1 [W/(m·K)].

### Method for Producing Spacer

A method for producing the spacer including the inclusion material and the exterior material includes a step of laminating the first layer on the outside of the metal layer with respect to the inclusion material. According to this method, it is possible to efficiently produce the spacer in which the exterior material includes the metal layer and the first layer, and the residual area ratio of the first layer in plan view from the thickness direction is 15% or more after the heat treatment including heating from 25°C to 500°C at 10°C/min and holding at 500°C for 10 minutes.

### Battery Pack

Next, a battery pack to which the spacer 10 is applied will be described. The battery pack is applied to, for example, a cell pack mounted on an electric vehicle (EV), a hybrid electric vehicle (HEV), a plug-in hybrid electric vehicle (PHEV), an electric heavy machine, an electric motorcycle, an electric assist bicycle, a ship, an aircraft, a train, an uninterruptible power supply (UPS), a household power storage system, a power system stabilization storage battery system using renewable energy such as wind power, solar power, tidal power, and geothermal power, and the like. However, the battery pack can also be used as a power source that supplies power to devices other than the above-described EV and the like.

A battery pack according to one embodiment of the present invention is a battery pack in which a spacer is disposed between unit cells, an exterior material of the spacer includes a metal layer, and contact between the metal layer and the unit cells is inhibited in an atmosphere of 500°C.

One aspect of the spacer is the above-described spacer. The spacer is preferably configured such that the thermal conductivity between the two unit cells is lowered at from 50 to 200°C with respect to the thermal conductivity between the unit cells at 25°C.

### Unit Cell

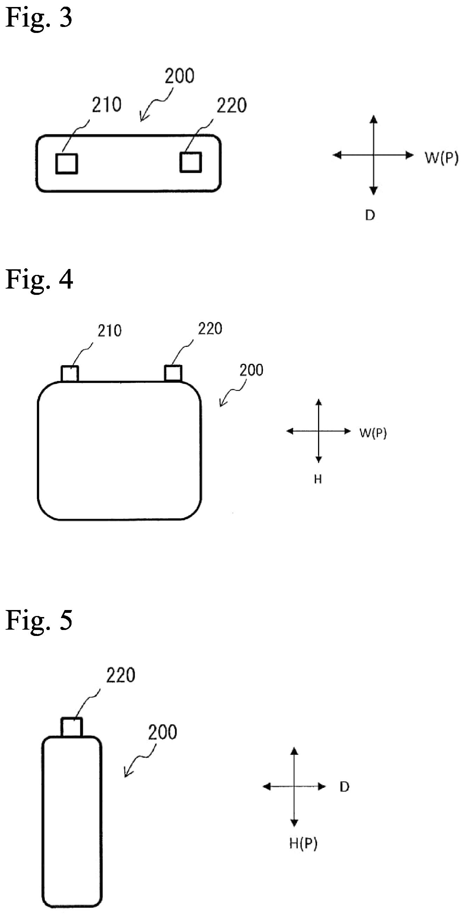

FIG. 3 is a plan view illustrating an example of the unit cell constituting the battery pack, FIG. 4 is a front view of the unit cell illustrated in FIG. 3, and FIG. 5 is a right side view of the unit cell. The unit cell 200 is formed in a rectangular parallelepiped shape having the height direction (H), the width direction (W), and the thickness direction (D), and a terminal 210 and a terminal 220 are provided on an upper surface thereof. The unit cell 200 is, for example, a lithium ion secondary battery including a positive electrode and a negative electrode capable of storing and releasing lithium ions, and an electrolyte. In addition to the lithium ion secondary battery, a secondary battery such as a lithium ion all-solid-state battery, a nickel hydrogen battery, a nickel cadmium battery, or a lead storage battery can be applied.

### Battery Pack

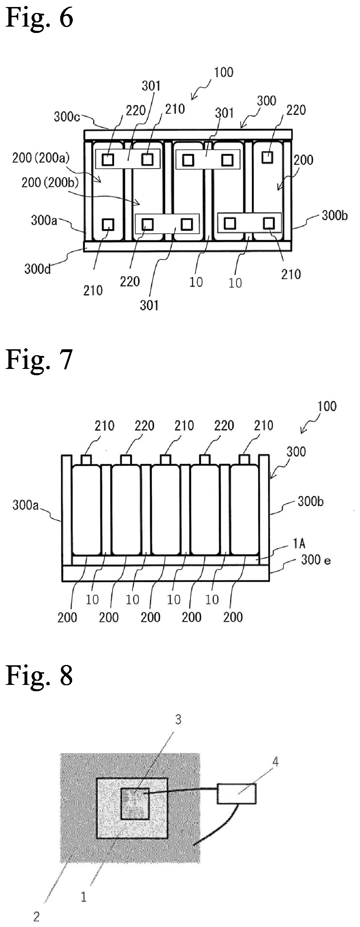

FIG. 6 is a top view of a battery pack 100 formed using a plurality of the unit cells 200, and FIG. 7 is a side view schematically illustrating a state in which a side plate 300d is removed from the battery pack 100 illustrated in FIG. 6. In FIGS. 6 and 7, the battery pack 100 includes a housing 300 and the plurality of unit cells 200 housed in the housing 300. The housing 300 includes a bottom plate 300e and side plates 300a, 300b, and 300c, and the side plate 300d erected along an outer periphery of the bottom plate 300e.

In FIGS. 6 and 7, five unit cells 200 are illustrated as an example, and the number of unit cells can be appropriately selected.

FIG. 6 illustrates a view in which a plane having the largest area among three planes of a rectangular parallelepiped approximating the unit cell is partitioned in the thickness direction of the spacer.

The expression "between unit cells" in which the spacer is disposed means between any two unit cells, and from the viewpoint of maximizing a heat insulation effect in a case of abnormality, it is preferable to partition the planes having the same area order among the three planes of the rectangular parallelepiped approximating the unit cell in the thickness direction of the spacer, and it is more preferable to partition the planes having the largest area in the thickness direction of the spacer.

When the shape of the unit cell is not a complete rectangular parallelepiped, the "rectangular parallelepiped" is applied as a three-dimensional body having a minimum volume in which the unit cell is inscribed.

The area in plan view from the thickness direction of the spacer is preferably equal to or less than the area of the rectangular parallelepiped that is partitioned by the spacer and approximates the unit cell.

In the housing 300, the plurality of unit cells 200 are arranged in the thickness direction, and the above-described spacer 10 is disposed between the unit cells 200. A positive electrode terminal (e.g., the terminal 210) and a negative electrode terminal (e.g., the terminal 220) of the unit cells 200 adjacent to each other (facing each other) with the spacer 10 interposed therebetween are electrically connected in series by a busbar 301, so that the battery pack 100 outputs a predetermined electric power. As illustrated in FIG. 7, in the battery pack 100, a spacer 1A is disposed between an upper surface of the bottom plate 300e of the housing 300 and each of the unit cells 200. The spacer 1A has the same configuration as the spacer 10.

### Heat Generation and Heat Transfer in Battery Pack

Some or all of chemical substances included in the electrode, the electrolyte liquid, and the like constituting the unit cell 200 cause a decomposition reaction while generating heat in the unit cell 200, so that the temperature of the unit cell 200 increases, and the temperature of a portion or the entire region of the unit cell 200 may reach 200°C or higher. In the present invention, this state is referred to as an "abnormal heat generation state".

In general, it is known that stability of a crystal structure after delithiation by charging greatly affects the safety of the positive electrode material among the materials constituting the unit cell 200. Materials such as LiCoO₂, Li (Ni_{1/3}Mn_{1/3}Co_{1/3}) O₂, and Li (Ni_{0.8}Co_{0.15}Al_{0.05}) O₂ which are generally used as the positive electrode materials cause crystal collapse accompanied by oxygen release at a high temperature in a charged state. The oxygen released from the positive electrode causes oxidation or the like of the electrolyte liquid, and is accompanied by a rapid exothermic reaction. It has been reported that phase transition of crystals occurs at around 200°C in the positive electrode material species by structural analysis using radiation light. Thus, when the temperature of a portion or the entire region of the unit cell 200 reaches 200°C or higher, it means that crystal collapse of the positive electrode is progressing, i.e., the unit cell 200 is in a thermal runaway state (Reference Document 1: Safety Technologies and Materials for Lithium-ion Batteries, CMC. Publishing, P. 44/Reference Document 2: J. Dahn et al., Electrochemistry Communication, 9, 2534-2540 (2007)/Reference Document 3: HIRONORI Kobayashi, "Evaluation and Analysis Technology of Positive Electrode Material for Lithium Ion Secondary Batteries Using Radiation Light", Industrial Users Society of Spring-8 Glass/Ceramics Study Group (2nd) (2011)).

Regarding the safety of a negative electrode material among the materials included in the unit cell 200, it is known that a charged negative electrode (lithium-inserted carbon negative electrode) basically exhibits strong reducibility similar to that of lithium metal, and a film is formed on a surface of the negative electrode by reaction with an electrolyte liquid, to thereby suppressing further reaction. Therefore, the chemical composition, structure, and thermal stability of the protective film greatly affect the thermal stability of the charged negative electrode when the temperature rises. Usually, the reaction between the charged negative electrode and the electrolyte liquid is described by formation of a protective film and subsequent explosive reductive decomposition reaction due to film breakage. In general, it is reported that the protective film forming reaction on the negative electrode proceeds from around 130°C, and the subsequent film decomposition reaction proceeds around 200°C, and finally reaches an explosive reductive decomposition reaction. Thus, when the temperature of a portion or the entire region of the unit cell 200 reaches 200°C or higher, it means that film breakage on the surface of the negative electrode is progressing, i.e., the unit cell 200 is in the thermal runaway state (Reference Document 4: Battery Handbook, 1st edition, Ohmsha, Ltd., P. 591/Reference Document 5: Recent trends of high safety and evaluation technologies in lithium-ion batteries, CMC Publishing CO., LTD., P. 90).

In the present invention, a state in which a chemical substance included in the electrode, the electrolyte liquid, and the like included in the unit cell 200 does not undergo a decomposition reaction accompanied by a certain or higher exothermic rate in the unit cell 200 is referred to as a "normal state". Here, the heat generation state of the unit cell 200 can be evaluated using accelerating rate calorimetry (ARC), which is a means for quantitatively measuring a thermal behavior when the reactive chemical substance self-heats and decomposes under an adiabatic condition. For example, Dahn et al. define that the self-exothermic reaction proceeds inside the cell when the exothermic rate observed in the ARC exceeds 0.04°C/min, and this can be followed (Reference Document 6: J. Dahn et al., Electrochimica Acta, 49, 4599-4604 (2004)). In the present invention, the unit cell 200 in the normal state is referred to as the "unit cell maintaining the normal state", and the unit cell 200 deviating from the normal state and not reaching the abnormal heat generation state is referred to as the "unit cell deviating from the normal state". The heat generated in the unit cell 200 is transmitted to another unit cell 200 via various transmission paths. For example, the heat generated in the unit cell 200 can be transmitted to another unit cell 200 via the spacer 10.

For example, the upper limit value of the surface average temperature assumed when the unit cell 200 in contact with or in proximity to the spacer 10 deviates from the normal state and does not reach the abnormal heat generation state is 180°C. Here, when a general-purpose separator material is made of polyethylene or polypropylene, the meltdown temperature thereof is known to be from 160 to 200°C. Thus, when the surface average temperature of the unit cell 200 is higher than 180°C, a portion of the general-purpose separator material constituting the unit cell 200 may melt down, leading to the abnormal heat generation state.

In a range in which the average temperature of one of the two surfaces of the spacer 10 in the thickness direction partitioning between the unit cells 200 constituting the battery pack 100 does not exceed 100°C, the spacer 10 can transfer heat from the unit cell 200 (e.g., a unit cell 200a) in the battery pack 100 in the thickness direction thereof, and can transfer the heat to another unit cell 200 (unit cell 200b) facing the unit cell 200a with the spacer 10 interposed therebetween and a member (e.g., the bottom plate 300e) other than the unit cell 200. Meanwhile, when the average temperature is higher than 100°C, the spacer 10 is opened by heat and the contained liquid flows out to the outside in a gas phase state or a liquid phase state. Due to this outflow, air (having a heat insulating action) enters the heat insulating material 110 in the spacer 10, and a heat insulating property (thermal resistance) in the thickness direction is increased. As a result, it is possible to avoid a situation in which, when a certain unit cell 200 deviates from the normal state, another unit cell 200 deviates from the normal state.

### Method for Producing Battery Pack

The battery pack of the present invention can be efficiently produced by a method including a step of disposing a spacer between two unit cells. That is, there is provided a method for producing a battery pack including a spacer including a unit cell and an exterior material, in the method for producing a battery pack, the exterior material includes a metal layer, the spacer is configured to inhibit contact between the metal layer and the unit cell under the condition of from 25 to 500°C, and the spacer is disposed between the two unit cells.

The configuration of the spacer and the battery pack of the present invention described above is an example, and can be appropriately changed based on a design request and the like without departing from the gist of the present invention.

### Method for Suppressing Conduction between Unit Cells

A method for suppressing conduction between unit cells in which a spacer disposed between the unit cells inhibits contact between the metal layer and the unit cell under the condition of from 25 to 500°C is also an aspect of the present invention.

### Using Method

Another aspect of the present invention is a method for using an inter-battery spacer, in which the spacer includes an inclusion material and an exterior material, the exterior material includes a metal layer and a first layer outside the metal layer with respect to the inclusion material, and the residual area ratio of the first layer in plan view from a thickness direction under the condition of from 25 to 500°C is 15% or more.

In the present specification, unless otherwise specified, the expression "from X to Y" or "X to Y" (with X and Y being any numbers) includes the meaning of "X or more and Y or less" and the meaning of "preferably more than X" or "preferably less than Y". In addition, the expression "X or more" (with X being any number) includes the meaning of "preferably more than X" unless otherwise specified, and the expression "Y or less" (with Y being any number) includes the meaning of "preferably less than Y" unless otherwise specified.

### Examples

The present invention will be described in more detail below by way of Examples.

However, as long as a departure from the gist of the present invention does not occur, the present invention is not limited to the following Examples.

### Evaluation Method

### (1-1) Intrinsic viscosity (IV)

1 g of polyester from which a component incompatible with the polyester was removed was precisely weighed, 100 mL of a mixed solvent of phenol/tetrachloroethane = 50/50 (mass ratio) was added to dissolve the polyester, and an intrinsic viscosity was measured at 30°C using a viscosity measuring apparatus "VMS-022UPC·F10" (available from RIGO).

### (1-2) Average particle diameter of particles

### In case of powder

The particle diameter at a cumulative volume fraction of 50% in an equivalent spherical distribution measured using a centrifugal sedimentation type particle size distribution measuring apparatus (SA-CP3 type) available from Shimadzu Corporation was defined as the average particle diameter d50.

### In case of particles in layer or resin

Ten or more particles were observed with a scanning electron microscope (SEM) to measure the diameters of the particles, and the average value thereof was taken as the average particle diameter of the particles. At that time, in the case of non-spherical particles, an average value of the longest diameter and the shortest diameter was taken as the diameter of each particle.

### (1-3) 5% weight loss temperature and weight residual rate

Using a TG-DTA apparatus (model: DTG60) available from Shimadzu Corporation, the temperature was raised from 25°C to 500°C at 10°C/min under a nitrogen atmosphere in accordance with JIS K7121 (2012). Thereafter, the temperature was held at 500°C for 10 minutes under a nitrogen atmosphere.

The 5% weight loss temperature (°C) and the weight residual rate (%) were determined by the above measurement.

### (1-4) Residual area ratio

A square sample film and a metal plate (made of brass, 50 × 50 mm × 5 mm thick) were allowed to stand in this order on a metal block (made of brass, 50 × 50 mm × 20 mm thick) to which a rod heater (fiber rod heater G1N available from Watlow Electric Manufacturing Company) was inserted, and the rod heater was heated to raise the temperature of a surface of a metal plate 2 from room temperature to 500°C (a temperature increase rate of 10°C/min), and then the metal plate was held at 500°C for 10 minutes to evaluate an insulating layer residual ratio in plan view.

The residual ratio is a ratio of the area after the heat treatment held at 500°C for 10 minutes to the area before the heat treatment. An image of a square sample in plan view is divided into 10 × 10 square sections, and a ratio of the sections in which the sample remains in the section even after the heat treatment is calculated.

### (1-5) Moldability

In the case of using as a spacer, the followability of the polyester film to the shape of the inclusion material was evaluated as follows because it was effective to bring the inclusion material and the exterior material into close contact with each other in order to maintain thermal characteristics as the spacer.

A polyester film having a size of 100 × 100 mm was stacked on cardboard having a size of 50 × 50 mm and a thickness of 1 mm. A laminated material in a stacked state was passed through a roll lamination machine at room temperature. Thereafter, the cardboard and the polyester film were separated from each other, the appearance of the polyester film was confirmed, and moldability was evaluated according to the following criteria.
⊚: After disassembling, wrinkles along the shape of the inclusion material can be clearly visually recognized.
○: After disassembling, wrinkles along the shape of the inclusion material can be slightly visually recognized.

### (1-6) Insulating properties

The measurement method will be described with reference to FIG. 8.

A sample film 1 and the metal plate 2 (made of brass, 50 × 50 mm × 5 mm thick) were allowed to stand in this order on a metal block 3 (made of brass, 50 × 50 mm × 20 mm thick) to which a rod heater (fiber rod heater G1N available from Watlow Electric Manufacturing Company) was inserted, and the rod heater was heated to raise the temperature of the surface of the metal plate 2 from room temperature to 500°C (a temperature increase rate of 10°C/min), and then the metal plate was held at 500°C for 10 minutes.

Thereafter, natural cooling was performed to room temperature, and the resistance between the surface of the metal plate 2 and the metal block 3 was measured using a tester 4 (model IR4054 available from HIOKI E.E. CORPORATION) under the condition of applying 125 V to evaluate the insulating properties (presence or absence of conduction).

### Materials used

(1) Polyester A: homopolyethylene terephthalate (intrinsic viscosity; 0.58 dL/g), dicarboxylic acid component (a-1): terephthalic acid = 100 mol%, diol component (a-2): ethylene glycol = 100 mol%
(2) Polyester B: homopolyethylene terephthalate (intrinsic viscosity; 0.70 dL/g), dicarboxylic acid component (a-1): terephthalic acid = 100 mol%, diol component (a-2): ethylene glycol = 100 mol%
(3) Polyester C: homopolyethylene terephthalate (intrinsic viscosity; 0.85 dL/g), dicarboxylic acid component (a-1): terephthalic acid = 100 mol%, diol component (a-2): ethylene glycol = 100 mol%
(4) Polyester D: homopolyethylene terephthalate (intrinsic viscosity; 1.10 dL/g), dicarboxylic acid component (a-1): terephthalic acid = 100 mol%, diol component (a-2): ethylene glycol = 100 mol%
(5) Polyester E: homopolyethylene terephthalate (intrinsic viscosity; 1.18 dL/g), dicarboxylic acid component (a-1): terephthalic acid = 100 mol%, diol component (a-2): ethylene glycol = 100 mol%
(6) Polyester F: masterbatch (intrinsic viscosity; 0.59 dL/g) in which 0.7 mass% of silica particles having an average particle diameter of 2.7 µm were blended in homopolyethylene terephthalate (polyester A)
(7) Polyester G: masterbatch (intrinsic viscosity; 0.64 dL/g) in which 1.0 mass% of silica particles having an average particle diameter of 3.2 µm were blended in homopolyethylene terephthalate (polyester A)
(8) Polyester H: masterbatch (intrinsic viscosity; 0.62 dL/g) in which 3.2 mass% of silica particles having an average particle diameter of 3.2 µm were blended in homopolyethylene terephthalate (polyester A)
(9) Polyester I: masterbatch (intrinsic viscosity; 0.70 dL/g) in which 3.5 mass% of silica particles having an average particle diameter of 4.1 µm were blended in homopolyethylene terephthalate (polyester A)
(10) Polyester J: masterbatch (intrinsic viscosity; 0.48 dL/g) in which 15.0 mass% of silica particles having an average particle diameter of 4.1 µm were blended in homopolyethylene terephthalate (polyester A)
(11) Polyester K: masterbatch (intrinsic viscosity; 0.48 dL/g) in which 35 mass% (3 mass% in terms of phosphorus element amount) of a phosphorus-based flame retardant having the following structure was blended in homopolyethylene terephthalate (polyester A) 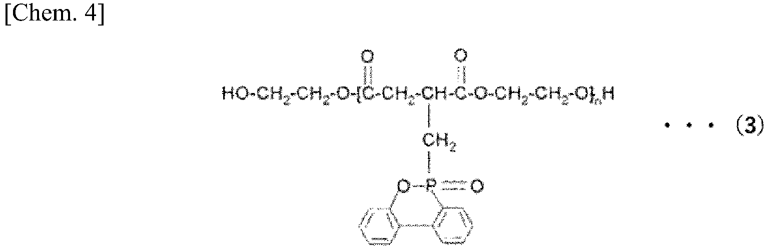 In Formula (3) above, n ≥ 4.
   The flame retardant of Formula (3) used was produced by the production method described in [0054] to [0058] in JP 2015-81271 A.
(12) Polyester L: masterbatch (intrinsic viscosity; 0.60 dL/g) in which 20 mass% of carbon black (oil-furnace black) having an average particle diameter of 70 nm was blended in homopolyethylene terephthalate
(13) Polyester M: masterbatch (intrinsic viscosity; 0.49 dL/g) in which 50 mass% of titanium oxide particles having an average particle diameter of 0.3 µm were blended in homopolyethylene terephthalate
(14) Polyester N: masterbatch (intrinsic viscosity; 0.64 dL/g) in which 1.5 mass% of a fluorescent whitening material (4,4'-Bis(2-benzoxazolyl)stilbene) was blended in homopolyethylene terephthalate

### Example 1-1

A raw material prepared by blending 48.8% of the polyester E, 2.5% of the polyester H, 44.7% of the polyester K, and 4.0% of the polyester L in mass proportions was supplied to an extruder with a vent, melt-extruded at 290°C, and then cooled and solidified on a cooling roll having a surface temperature set to 40°C using an electrostatic application adhesion method to form an amorphous film.

Next, the resultant unstretched sheet was stretched 3.0 times at 85°C in a longitudinal direction (MD) by a roll stretching machine. In addition, a resin composition having the following composition was applied so that the thickness after drying was 0.02 µm, preheated at 125°C in a tenter, and then stretched 4.0 times in a width direction (TD) at 130°C. Finally, a heat fixation treatment was performed at 215°C to produce a biaxially stretched polyester film including a resin layer and having a thickness of 50 µm. The evaluation results are shown in Table 1.

### Resin layer composition

The following compounds O to Q were mixed so that the solid content proportions O/P/Q = 80:10:10 (mass%) to prepare a resin layer composition.
(15) Compound O: aqueous dispersion of polyester resin copolymerized with the following composition
(Acid component) terephthalic acid/isophthalic acid/5-sodiumsulfoisophthalic acid//(diol component) ethylene glycol/1,4-butanediol/diethylene glycol = 56/40/4//70/20/10
(16) Compound P: aqueous dispersion of polyurethane resin copolymerized with the following composition
Aqueous dispersion prepared by neutralizing a polyurethane resin composed of isophorone diisocyanate/polyhexamethylene carbonate polyol/polyoxytetramethylene glycol/dimethylolpropanoic acid = 15/78/5/2 (mol%) with triethylamine
(17) Compound Q: hexamethoxymethylolmelamine

### Example 1-2 to Example 1-11, and Comparative Example 1-1

A polyester film was produced in the same manner as in Example 1 except that the raw material formulation, the film thickness, and the presence or absence of the resin layer were different from those in Example 1.

### [Table 1]

**Table 1**

| Layer configuration | | | Example 1-1 | Example 1-2 | Example 1-3 | Example 1-4 | Example 1-5 | Example 1-6 | Example 1-7 | Example 1-8 | Example 1-9 | Example 1-10 | Example 1-11 | Comparative Example 1-1 |
|---|---|---|---|---|---|---|---|---|---|---|---|---|---|---|
| Film thickness | | µm | 50 | 50 | 38 | 25 | 38 | 50 | 50 | 50 | 26 | 26 | 50 | 50 |
| Monolayer | | µm | 50 | 50 | 38 | 25 | 38 | 50 | 50 | 50 | 26 | 26 | 50 | |
| Multilayer | Surface layer | µm | | | | | | | | | | | | 6 |
| | Intermediate layer | µm | | | | | | | | | | | | 38 |
| | Surface layer | µm | | | | | | | | | | | | 6 |
| Monolayer | Polyester A | mass% | 0.0 | 0.0 | 11.7 | 38.4 | 43.9 | 57.1 | 0.0 | 68.5 | 20.0 | 55.0 | 58.0 | |
| | Polyester B | mass% | 0.0 | 0.0 | 0.0 | 52.3 | 46.4 | 31.7 | 0.0 | 0.0 | 0.0 | 0.0 | 0.0 | |
| | Polyester C | mass% | 0.0 | 49.1 | 0.0 | 0.0 | 0.0 | 0.0 | 0.0 | 0.0 | 0.0 | 0.0 | 0.0 | |
| | Polyester D | mass% | 0.0 | 0.0 | 45.0 | 0.0 | 0.0 | 0.0 | 0.0 | 16.7 | 12.3 | 15.0 | 15.0 | |
| | Polyester E | mass% | 48.8 | 0.0 | 0.0 | 0.0 | 0.0 | 0.0 | 55.0 | 0.0 | 0.0 | 0.0 | 0.0 | |
| | Polyester F | mass% | 0.0 | 0.0 | 0.0 | 0.0 | 0.0 | 0.0 | 0.0 | 0.0 | 0.0 | 0.0 | 0.0 | |
| | Polyester G | mass% | 0.0 | 0.0 | 0.0 | 4.0 | 4.0 | 6.0 | 0.0 | 10.0 | 0.0 | 0.0 | 0.0 | |
| | Polyester H | mass% | 2.5 | 0.0 | 0.0 | 0.0 | 0.0 | 0.0 | 2.1 | 0.0 | 0.0 | 0.0 | 0.0 | |
| | Polyester I | mass% | 0.0 | 16.1 | 0.0 | 0.0 | 0.0 | 0.0 | 0.0 | 0.0 | 67.7 | 30.0 | 27.0 | |
| | Polyester J | mass% | 0.0 | 0.0 | 5.3 | 0.0 | 0.0 | 0.0 | 0.0 | 0.0 | 0.0 | 0.0 | 0.0 | |
| | Polyester K | mass% | 44.7 | 0.0 | 0.0 | 0.0 | 0.0 | 0.0 | 42.9 | 0.0 | 0.0 | 0.0 | 0.0 | |
| | Polyester L | mass% | 4.0 | 0.0 | 0.0 | 0.0 | 0.0 | 0.0 | 0.0 | 4.8 | 0.0 | 0.0 | 0.0 | |
| | Polyester M | mass% | 0.0 | 30.0 | 31.0 | 5.4 | 5.7 | 5.1 | 0.0 | 0.0 | 0.0 | 0.0 | 0.0 | |
| | Polyester N | mass% | 0.0 | 4.8 | 7.0 | 0.0 | 0.0 | 0.0 | 0.0 | 0.0 | 0.0 | 0.0 | 0.0 | |
| Surface layer raw material | Polyester B | mass% | | | | | | | | | | | | 58 |
| | Polyester F | mass% | | | | | | | | | | | | 42 |
| Intermediate layer raw material | Polyester A | mass% | | | | | | | | | | | | 48 |
| | Polyester B | mass% | | | | | | | | | | | | 52 |
| Longitudinal stretching temperature | | °C | 85 | 82 | 82 | 82 | 82 | 82 | 85 | 85 | 81 | 75 | 80 | 90 |
| Longitudinal stretching ratio | | - | 3.0 | 3.2 | 3.3 | 3.6 | 3.6 | 3.5 | 3 | 3.5 | 3.8 | 3.8 | 3.8 | 3.4 |
| Transverse stretching temperature | | °C | 130 | 115 | 115 | 110 | 105 | 120 | 130 | 120 | 120 | 115 | 120 | 135 |
| Transverse stretching ratio | | - | 4.0 | 4.1 | 4.2 | 4.2 | 3.9 | 4.1 | 3.9 | 4.0 | 4.4 | 4.2 | 4.2 | 4.5 |
| Heat fixation temperature | | °C | 215 | 235 | 235 | 230 | 225 | 230 | 215 | 230 | 235 | 235 | 235 | 222 |
| Presence or absence of resin layer (application) | | - | Present | Absent | Absent | Absent | Absent | Absent | Present | Absent | Absent | Absent | Absent | Absent |
| I Inorganic particles | | mass% | 0.1 | 15.6 | 16.3 | 2.7 | 2.9 | 2.6 | 0.1 | 1.1 | 2.4 | 1.1 | 0.9 | 0.1 |
| II Flame retardant | | mass% | 15.6 | 0.0 | 0.0 | 0.0 | 0.0 | 0.0 | 15.0 | 0.0 | 0.0 | 0.0 | 0.0 | 0.0 |
| III Flame retardant (amount in terms of phosphorus element) | | mass% | 1.5 | 0.0 | 0.0 | 0.0 | 0.0 | 0.0 | 1.4 | 0.0 | 0.0 | 0.0 | 0.0 | 0.0 |
| IV Others | | mass% | 0.0 | 0.1 | 0.1 | 0.0 | 0.0 | 0.0 | 0.0 | 0.0 | 0.0 | 0.0 | 0.0 | 0.0 |
| Total of additives (I + III + IV) | | mass% | 1.6 | 15.7 | 16.4 | 2.7 | 2.9 | 2.6 | 1.5 | 1.1 | 2.4 | 1.1 | 0.9 | 0.1 |
| 5% loss temperature | | °C | 392 | 401 | 399 | 400 | 402 | 400 | 393 | 402 | 403 | 399 | 402 | 402 |
| Final residual rate | | % | 16.2 | 29.2 | 29.5 | 16.7 | 17.4 | 15.7 | 15.1 | 15.0 | 16.8 | 15.0 | 15.1 | 14.5 |
| Residual area ratio | | % | 85 | 96.0 | 91.0 | 86.0 | 93.0 | 96.0 | 94.0 | 96.0 | 95.0 | 99.0 | 93.0 | 14.0 |
| Moldability | | - | ○ | ○ | ⊚ | ⊚ | ⊚ | ○ | ○ | ○ | ⊚ | ⊚ | ⊚ | O |

As can be seen from the results in Table 1, in the polyester films of Examples 1-1 to 1-11, the weight residual rate by thermogravimetric differential thermal analysis (TG-DTA) was 15.0% or more, and the insulating properties were confirmed. When the square sample film was divided into four square sections, the first layer remained in four or more sections. When the square sample was divided into 25 square sections, the first layer remained in 20 or more sections. In contrast, in Comparative Example 1-1, the weight residual rate by thermogravimetric differential thermal analysis (TG-DTA) was less than 15.0%, and the insulating properties were not confirmed.

Therefore, it is obvious that the effect of the present invention is exhibited by using the polyester film as the first layer of the exterior material.

It has been found that the polyester film of the present invention can partially remain as a carbonized layer without completely vaporizing the film (resin layer) by using a biaxially stretched polyester film using a specific amount of inorganic particles and/or a flame retardant in a temperature region of 500°C where the polyester resin layer does not originally remain due to melting and vaporization.

The present inventors have completed the present invention based on a completely new idea that a polyester film is carbonized and used as a carbonized layer, which has not been known.

Thus, it is possible to contribute to suppression of the thermal runaway reaction by further improving a current cutoff function in a case of short circuit by melting and carbonization. Therefore, the polyester film of the present invention can be suitably used particularly for various applications requiring the insulating properties, and the effect of the present invention can be exhibited by using the polyester film as the first layer of the exterior material in the spacer of the present invention.

In contrast, in the polyester film of Comparative Example 1-1, the weight residual rate measured by thermogravimetric differential thermal analysis (TG-DTA) was less than 15.0%, and the polyester film was completely vaporized in an atmosphere at 500°C, so that the surface of the metal plate was conducted, and the insulating properties were insufficient.

### Evaluation Method

### (2-1) Sheet thickness

The thickness of the heat-resistant sheet was measured using thickness gauge 547-401 available from Mitutoyo Corporation.

### (2-2) Fiber diameter

The fiber system of the heat-resistant sheet was measured using a digimatic caliper CD-15APX available from Mitutoyo Corporation.

### (2-3) Piercing strength

The piercing strength of the heat-resistant sheet was evaluated under a test environment of 23°C and 50%RH in accordance with JIS Z 1707 using a universal material testing machine 5566 available from Instron. Test conditions were as follows: a test speed of 50 mm/min, a needle shape of 1 mm in diameter, and a tip radius of 0.5 mm.

### (2-4) Thermal conductivity at 45°C

The "surface average temperature" means an average temperature of any three points in contact with a heating element on the spacer surface.

The thermal conductivity at 45°C was measured as follows.

A heater, a brass plate, a heat insulating plate A (Misumi Co., Ltd., model: HIPHA, thickness: 10 mm), a brass plate, a porous body, a brass plate, a heat insulating plate A, a brass plate, and a heat insulating plate B (Misumi Co., Ltd., model: HIPHA, thickness: 40 mm) were sandwiched in this order, and the respective members were brought into close contact with each other. The above-described heat insulating material was used as a spacer. From above the heat insulating plate B, a load was adjusted to 375 kg (corresponding to 15 kgf/cm2) using a hydraulic press machine HYP505H (available from Japan Automatic Machine Co., Ltd.).

In the state where the load was applied, a heater temperature was raised to 45°C. After the heater temperature reached 45°C, heating at the temperature was continued for 60 minutes. The thickness (referred to as "film thickness") of the heat insulating material (spacer) was measured after completion of heating, and a room temperature thermal conductivity kL of the heat insulating material was determined from the temperature at each position at the end of heating, a thermal conduction resistance from the heater to the heat insulating material, and the film thickness of the heat insulating material at the time of compression according to the following equation. $kL = \left(ΔT1\times L\right) / \left(ΔT2\times R\right)$
kL: thermal conductivity of heat insulating material [W/(m·K)]
ΔT1: temperature difference [K] between high-temperature side surface and low-temperature side surface of heat insulating plate A
ΔT2: temperature difference [K] between high-temperature side surface and low-temperature side surface of heat insulating material
L: film thickness of heat insulating material at time of compression [m]
R: thermal conduction resistance from heater to heat insulating material 6.8 × 10⁻³ [m²·K/W]

### (2-5) Residual area ratio

Evaluation was performed in the same manner as in the above (1-4).

### (2-6) Insulating properties

The measurement method will be described with reference to FIG. 8.

A sample film 1 and the metal plate 2 (made of brass, 50 × 50 mm × 5 mm thick) were allowed to stand in this order on a metal block 3 (made of brass, 50 × 50 mm × 20 mm thick) to which a rod heater (fiber rod heater G1N available from Watlow Electric Manufacturing Company) was inserted, and the rod heater was heated to raise the temperature of the surface of the metal plate 2 from room temperature to 500°C (a temperature increase rate of 10°C/min), and then the metal plate was held at 500°C for 10 minutes.

Thereafter, natural cooling was performed to room temperature, and the resistance between the surface of the metal plate 2 and the metal block 3 was measured using a tester 4 (model IR4054 available from HIOKI E.E. CORPORATION) under the condition of applying 125 V to evaluate the insulating properties (presence or absence of conduction).

### Example 2-1

A glass cloth sheet 1 described in Table 1 was used. The piercing strength was 7.5 N. The evaluation results are shown in Table 1.

### Example 2-2

A glass cloth sheet 2 described in Table 1 was used. The evaluation results are shown in Table 1.

### Example 2-3

A polyimide sheet 2 described in Table 1 was used. The evaluation results are shown in Table 1.

### [Table 2]

**Table 2**

| | Heat-resistant sheet, heat-resistant film | | | | Evaluation of insulating properties | |
|---|---|---|---|---|---|---|
| | Configuration | Layer thickness [µ] | Fiber diameter [µ] | Thermal conductivity [W/(m.K)] | Residual area ratio @500°C [%] | Conduction |
| Example 2-1 | Glass cloth sheet 1 | 95 | 27 | 0.27 | > 99 | Absent |
| Example 2-2 | Glass cloth sheet 2 | 60 | 16 | 0.18 | > 99 | Absent |
| Example 2-3 | Polyimide sheet | 130 | - | 0.47 | > 99 | Absent |

As can be seen from the results in Table 2, the heat-resistant sheets of Examples 2-1 to 2-3 had an excellent film residual ratio under high-temperature conditions, and the remaining film inhibited the contact between the tester and the metal plate, so that the evaluation of an edge property was good. When the square sample film was divided into four square sections, the first layer remained in four or more sections. When the square sample was divided into 25 square sections, the first layer remained in 20 or more sections. Therefore, even when the resin layer, which is a main constituent material of the exterior material, is melted, the insulating properties can be maintained, so that even when an abnormality occurs in the unit cell and the temperature reaches a high temperature, high safety can be maintained. Since the heat-resistant sheet of Example 2-1 or 2-2 has a low thermal conductivity, it can also contribute to blocking heat transfer between batteries in a case of abnormality.

### Reference Signs List

1 Sample film
2 Metal plate
3 Metal block
4 Tester
10 Spacer
100 Battery pack
110 Inclusion material
111 Internal space
120 Exterior material
120a Peripheral edge portion, sealing portion
120b Gap
200 Unit cell
200a Unit cell
200b Unit cell
210 Terminal
220 Terminal
300 Housing
300a Side plate
300b Side plate
300c Side plate
300d Side plate
300e Bottom plate
301 Busbar
S1 First region
S2 Second region

## Claims

1. A battery pack in which a spacer is disposed between unit cells,
the spacer including an exterior material and an inclusion material, and the exterior material including a metal layer, wherein
the metal layer is not in contact with the unit cells at a temperature of from 25 to 500°C.

2. A battery pack in which a spacer is disposed between unit cells,
the spacer including an exterior material and an inclusion material, the exterior material including a metal layer, and the exterior material including a first layer outside the metal layer with respect to the inclusion material, wherein
a ratio of an area of the first layer after a heat treatment including heating from 25°C to 500°C at 10°C/min and holding at 500°C for 10 minutes to an area of the first layer before the heat treatment is 15% or more.

3. The battery pack according to claim 2, wherein the first layer forms a carbonized layer under a condition of the heat treatment.

4. The battery pack according to claim 2, wherein the first layer is a resin layer containing at least one of inorganic particles or a flame retardant.

5. The battery pack according to claim 4, wherein the flame retardant contains a phosphoric acid ester.

6. The battery pack according to claim 4, wherein the inorganic particles contain at least one selected from the group consisting of a metal oxide, a metal hydroxide, and a carbonaceous material.

7. The battery pack according to claim 2, wherein a 5% weight loss temperature of a resin composition containing a resin contained in the first layer and at least one of inorganic particles or a flame retardant is from 30 to 80°C.

8. The battery pack according to claim 2, wherein the first layer is a heat-resistant layer.

9. The battery pack according to claim 8, wherein the heat-resistant layer contains a fibrous material.

10. The battery pack according to claim 1 or 2, wherein a heat-resistant sheet is further disposed between the spacer and the unit cells.

11. The battery pack according to claim 8, wherein the heat-resistant layer is a fibrous sheet.

12. The battery pack according to claim 2, wherein the first layer has a thickness of from 10 to 125 µm.

13. The battery pack according to claim 2, wherein a ratio of a thickness of the inclusion material to a thickness of the first layer is from 0.002 to 0.3.

14. The battery pack according to claim 1 or 2, wherein the spacer contains a liquid in the inclusion material.

15. The battery pack according to claim 1 or 2, wherein the spacer contains a porous body in the inclusion material.

16. The battery pack according to claim 1 or 2, wherein the spacer has a thermal conductivity of 0.18 W/(m·K) or more at a surface average temperature of 45°C.

17. The battery pack according to claim 1 or 2, wherein the spacer has a thermal conductivity of less than 0.20 W/(m·K) at a surface average temperature of 180°C.

18. A spacer comprising an exterior material and an inclusion material, wherein
the exterior material includes a metal layer, the exterior material further includes a first layer outside the metal layer with respect to the inclusion material, and a ratio of an area of the first layer after a heat treatment including heating from 25°C to 500°C at 10°C/min and holding at 500°C for 10 minutes to an area of the first layer before the heat treatment is 15% or more.

19. A method for producing a battery pack including a unit cell and a spacer including an exterior material, the exterior material including a metal layer, wherein the metal layer and the unit cell are configured not to be in contact with each other at a temperature of from 25 to 500°C, the method comprising disposing the spacer between two unit cells.

20. A method for suppressing conduction between unit cells, wherein a spacer disposed between the unit cells inhibits contact between the metal layer and the unit cells at a temperature of from 25 to 500°C.

21. A method for using an inter-battery spacer, the spacer including an exterior material and an inclusion material, and the exterior material including a metal layer and a first layer outside the metal layer with respect to the inclusion material, wherein a ratio of an area of the first layer after a heat treatment including heating from 25°C to 500°C at 10°C/min and holding at 500°C for 10 minutes to an area of the first layer before the heat treatment is 15% or more.
